# EUROPEAN PATENT APPLICATION

(11) **EP 4 744 869 A1**
(43) Date of publication of application: **20.05.2026**
(21) Application number: 24863285.3
(22) Date of filing: 06.09.2024
(51) Int. Cl.: B29C 65/00, B29C 65/02, H01M 50/105, H01M 50/183, B29L 31/00

(54) **POUCH MOLDING APPARATUS**

(30) Priority: 08.09.2023 KR 20230119954
(71) Applicant: LG Energy Solution, Ltd., Seoul 07335 (KR)
(72) Inventor: JEONG, Chang Uk, Daejeon 34122 (KR)
(74) Representative: Goddar, Heinz J.
(86) International application number: PCT/KR2024/013564
(87) International publication number: WO 2025/053706

(57) **Abstract**

A pouch forming apparatus according to the present disclosure is configured to form a pouch including an accommodation portion configured to accommodate an electrode assembly and a sealing portion extended from the accommodation portion, and includes a heat press configured to apply pressure to the sealing portion to bend at least part of the sealing portion to form an unfolding portion extended from the accommodation portion and a folding portion extended in a direction that is different from a direction in which the unfolding portion is extended, wherein the heat press includes a main heat press configured to apply pressure to the folding portion, and a sub heat press configured to heat a hinge portion connecting the unfolding portion and the folding portion while the main heat press applies pressure to the folding portion, the sub heat press extended in a direction that is different from the extension direction of the main heat press.

## Description

### TECHNICAL FIELD

### CROSS-REFERENCE TO RELATED APPLICATIONS

The present application claims priority to Korean Patent Application No. 10-2023-0119954 filed on September 8, 2023 in the Republic of Korea, the disclosure of which is incorporated herein by reference.

### TECHNICAL FIELD

The present disclosure relates to a pouch forming apparatus. More particularly, the present disclosure relates to a pouch forming apparatus for forming a pouch that covers an electrode assembly.

### BACKGROUND ART

With the technology development and growing demand for electric vehicles and mobile devices, the demand for secondary batteries as an energy source is increasing. As opposed to primary batteries that can only be used once, secondary batteries can be reused through charging. A secondary battery includes a positive electrode and a negative electrode. When oxidation of a metal occurs at a positive electrode, electricity is produced by movement of electrons released from the metal. The oxidized metal at the positive electrode moves to the negative electrode through an electrolyte and reduction occurs at the negative electrode.

To manufacture a secondary battery, first, an electrode active material slurry is applied to a positive current collector and a negative current collector to manufacture a positive electrode and a negative electrode, and the positive electrode and the negative electrode are stacked on two sides of a separator to form an electrode assembly. Additionally, the electrode assembly is received in a battery case, an electrolyte is injected into the battery case, and the battery case is sealed.

Secondary batteries are classified into a pouch type and a can type according to the material of the case accommodating the electrode assembly. The pouch-type secondary battery is formed by accommodating the electrode assembly in the pouch made of flexible polymer. Additionally, the can-type secondary battery is formed by accommodating the electrode assembly in the case made of metal or plastic.

The battery case or the pouch of the pouch-type secondary battery is manufactured by pressing a pouch film having flexibility to form an accommodation portion. Additionally, when the accommodation portion is formed, the electrode assembly is received in an accommodation space of the accommodation portion, and the edge of the accommodation portion is fused to form a sealing portion to seal the pouch.

In this instance, to load a larger number of secondary batteries in the battery module case, it is necessary to reduce the width of the secondary battery. To reduce the width of the secondary battery, the sealing portion at the edge of the pouch is bent to form a folding portion. However, because the folding portion is formed by folding the sealing portion, as time goes by, the folding portion may be gradually unfolded.

The unfolding may cause interference between the plurality of loaded secondary batteries and contact with the battery module case accommodating the secondary batteries, resulting in electrical conduction in the secondary batteries, and heat generation from the secondary batteries. Accordingly, to prevent this, it is necessary to prevent the folding portion from unfolding.

Further, cracks may occur in a sealant layer of the pouch during folding of the folding portion. The pouch film may include a moisture barrier layer including metal and the sealant layer including polymer. When cracks occur in the sealant layer, the electrolyte may contact the moisture barrier layer, and in this case, the electric current may flow to the moisture barrier layer, causing electric leakage. In the event of electric leakage, the secondary batteries fail to efficiently produce power, and injury may occur in a user when the user touches the secondary battery or the case of the secondary batteries, and accordingly there is a need to prevent this.

### SUMMARY

### TECHNICAL PROBLEM

The present disclosure is designed to solve the above-described problems, and therefore the present disclosure is directed to providing a pouch forming apparatus configured to prevent unfolding of a folding portion formed by folding a sealing portion to ensure width process efficiency of a secondary battery.

The present disclosure is further directed to providing a pouch forming apparatus configured to prevent cracks in a hinge portion of a pouch in the process of forming the folding portion by bending the sealing portion.

The technical problems to be solved by the present disclosure are not limited to the aforementioned technical problems, and these and other technical problems will be clearly understood by persons having ordinary skill in the technical field pertaining to the present disclosure from the following description.

### TECHNICAL SOLUTION

A pouch forming apparatus according to an embodiment of the present disclosure is configured to form a pouch including an accommodation portion configured to accommodate an electrode assembly and a sealing portion extended from the accommodation portion, and includes a heat press configured to apply pressure to the sealing portion to bend at least part of the sealing portion to form an unfolding portion extended from the accommodation portion and a folding portion extended in a direction that is different from a direction in which the unfolding portion is extended, wherein the heat press includes a main heat press configured to apply pressure to the folding portion and a sub heat press configured to heat a hinge portion connecting the unfolding portion and the folding portion while the main heat press applies pressure to the folding portion, the sub heat press extended in a direction that is different from the extension direction of the main heat press.

A pouch forming apparatus according to an embodiment of the present disclosure includes a heat press configured to apply pressure to a pouch, wherein the heat press includes a main heat press and a sub heat press coupled to the main heat press, and extended in a direction that is different from an extension direction of the main heat press.

### ADVANTAGEOUS EFFECTS

The pouch forming apparatus according to the present disclosure includes the heat press configured to apply heat to the hinge portion connecting the unfolding portion and the folding portion of the pouch while the main heat press applies pressure to the folding portion of the pouch, thereby preventing the folding portion from unfolding.

The pouch forming apparatus according to the present disclosure is configured to apply heat to the hinge portion connecting the unfolding portion and the folding portion of the pouch to make the sealant layer of the hinge portion flowable, thereby preventing cracks in the hinge portion while forming the folding portion by bending the sealing portion.

The effects that can be obtained from the present disclosure are not limited to the aforementioned effects, and these and other effects will be clearly understood by persons having ordinary skill in the technical field pertaining to the present disclosure from the following description.

### BRIEF DESCRIPTION OF THE DRAWINGS

FIG. 1 is a perspective view showing that an electrode assembly according to an embodiment of the present disclosure is accommodated in a pouch.
FIG. 2 is a cross-sectional view showing that a first sealing portion gets closer to a second sealing portion of the pouch shown in FIG. 1.
FIG. 3 is a perspective view showing a folding portion formed after the first sealing portion is adhered to the second sealing portion of the pouch shown in FIG. 1.
FIG. 4 is a conceptual view showing the step of forming the folding portion through a conventional pouch forming apparatus.
FIG. 5 is a conceptual view showing the step of forming the folding portion through a pouch forming apparatus of the present disclosure.
FIG. 6 is a perspective view showing that a heat press of the pouch forming apparatus according to the first embodiment heats a hinge portion of the pouch.
FIG. 7 is an enlarged cross-sectional view showing the heat press and the secondary battery shown in FIG. 6, taken along the line VII-VII'.
FIG. 8 is a perspective view showing the heat press shown in FIG. 6.
FIG. 9 is a perspective view showing that a cooling unit of the pouch forming apparatus according to the first embodiment cools the hinge portion of the pouch.
FIG. 10 is an enlarged cross-sectional view showing the cooling unit and the secondary battery shown in FIG. 9, taken along the line X-X'.
FIG. 11 is a perspective view showing the cooling unit shown in FIG. 9.
FIG. 12 is an enlarged cross-sectional view showing a heat press and a secondary battery according to a second embodiment.
FIG. 13 is an enlarged cross-sectional view showing a heat press and a secondary battery according to a third embodiment.
FIG. 14 is an enlarged cross-sectional view showing a heat press and a secondary battery according to a fourth embodiment.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "1st", "2nd", or "first", "second" and so on may be simply used to distinguish the corresponding element from the corresponding other element, and are not intended to limit the corresponding elements in another aspect (for example, importance or order).

When an element (for example, first) is referred to as being "coupled" or "connected" to another element (for example, second) with or without the term "functionally" or "through communication", the element may be connected to the other element directly (for example, wiredly), wirelessly or through a third element.

The term "comprise" or "have" indicates the presence of the stated features, figures, steps, operations, elements, components or a combination of them, and does not previously preclude the presence or addition of one or more other features, figures, steps, operations, elements, components or a combination of them.

When an element is referred to as "being connected", "being coupled to", "being supported" or "contacting" another element, this includes the cases in which the elements are directly connected, coupled, supported or contacted with each other and they are indirectly connected, coupled, supported or contacted with each other through a third element.

When an element is referred to as being located "on" another element, the element can contact the other element and another element may be present between them.

Meanwhile, the terms "up-down direction", "downward", and "front-rear direction" as used herein are defined on the basis of the drawings, and the shape and location of each element is not limited by these terms.

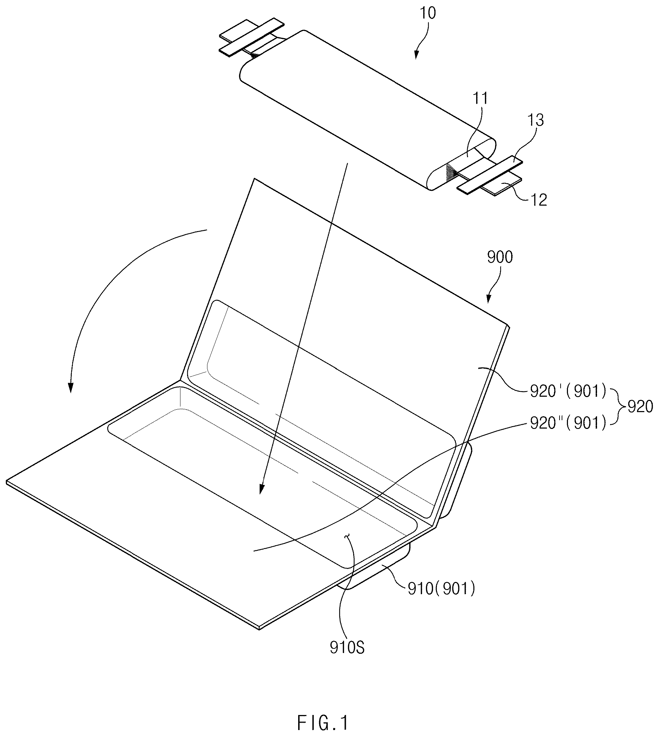

Specifically, as shown in FIG. 1, a direction in which an electrode assembly 10 is moved to be accommodated in an accommodation space 910S is defined as a lower side, and a direction in which an electrode lead 12 is extended as a front side, and on the basis of the definition, an upper side, a rear side, a left side and a right side may be defined.

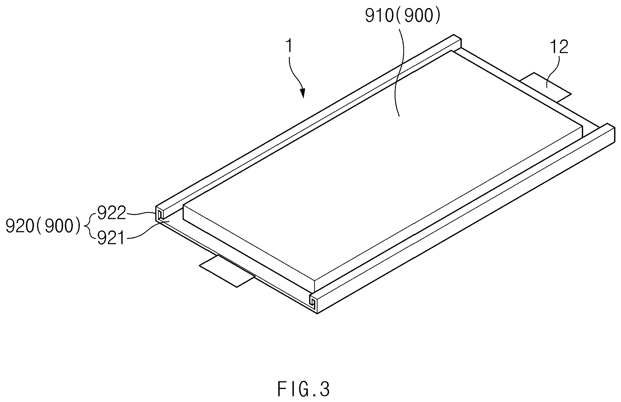

Alternatively, as shown in FIG. 3, the direction in which the electrode lead 12 is extended is defined as a front side, and a direction in which a folding portion 922 is extended from an unfolding portion 921 is defined as an upper side, and on the basis of the definition, a rear side, a lower side, a left side and a right side may be defined.

Hereinafter, the embodiments according to the present disclosure will be described in detail with reference to the accompanying drawings.

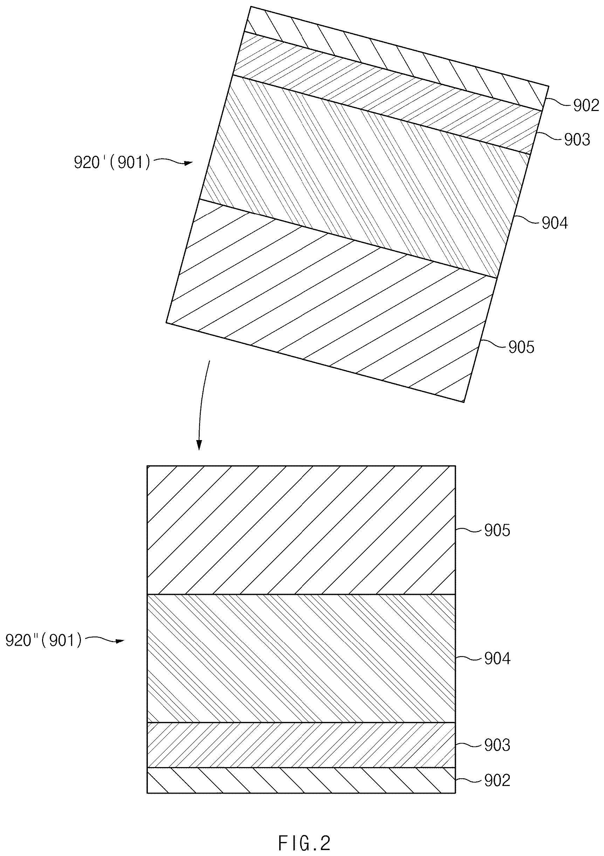

FIG. 1 is a perspective view showing that the electrode assembly 10 according to an embodiment of the present disclosure is accommodated in a pouch 900. FIG. 2 is a cross-sectional view showing that a first sealing portion 920' gets closer to a second sealing portion 920" of the pouch 900 shown in FIG. 1. FIG. 3 is a perspective view showing the folding portion 922 formed after the first sealing portion 920' is adhered to the second sealing portion 920" of the pouch 900 shown in FIG. 1.

A secondary battery 1 according to an embodiment of the present disclosure will be described with reference to FIGS. 1 to 3.

The secondary battery 1 may include the electrode assembly 10. The electrode assembly 10 may be formed by stacking an electrode (not shown) and a separator (not shown) in an alternating manner. First, a slurry including an electrode active material, a binder and a plasticizer may be applied to a positive current collector and a negative current collector to manufacture a positive electrode and a negative electrode. Additionally, the separators may be stacked between the electrodes to form the electrode assembly 10, the electrode assembly 10 may be inserted into a battery case (not shown), an electrolyte 20 may be injected into the battery case and the battery case may be sealed.

Specifically, the electrode assembly 10 may include the two types of electrodes, the positive electrode and the negative electrode, and the separator interposed between the electrodes to insulate them from each other. The electrode assembly 10 may include a stack type, a jellyroll type, a stack and folding type and so on, according to the way of stacking the positive electrode, the negative electrode and the separator. The two types of electrodes, that is, the positive electrode and the negative electrode may have a structure in which the active material slurry is applied to the metal foil or mesh-type electrode current collector including aluminum and copper, respectively. The slurry may be generally formed by mixing the particulate active material, an auxiliary conductive material, the binder and the plasticizer with an addition of a solvent. The slurry solvent may be removed in the subsequent process.

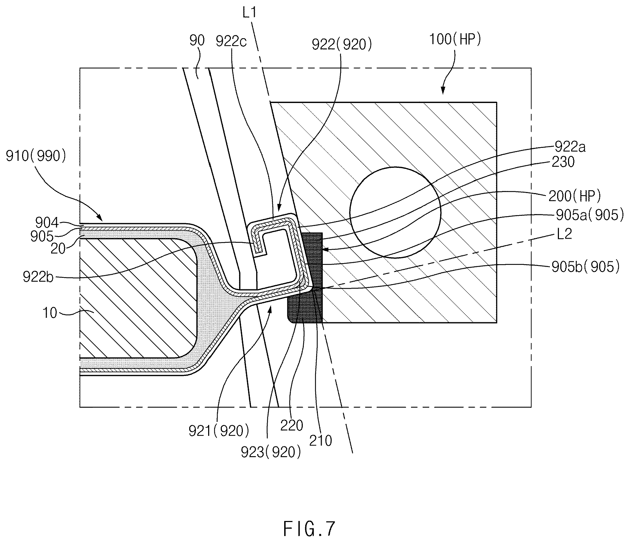

More specifically, the positive electrode may include a positive electrode material having strong oxidizing power to provide electrons. For example, the positive electrode material may include lithium ion-transition metal-oxygen. The transition metal may include nickel, cobalt or manganese. The negative electrode may include a negative electrode material having strong reducing power to accept electrons. For example, the negative electrode material may include graphite. When the secondary battery 1 is charged and discharged, electrons may migrate with movement of lithium ions. In this case, the lithium ions may move through the electrolyte 20 (see FIG. 7) located between the positive electrode and the negative electrode, and the electrons may move through a wire connecting the positive electrode to the negative electrode.

For example, during charging of the secondary battery 1, the lithium ions at the positive electrode may move to the graphite at the negative electrode, may accept electrons at the negative electrode, and may transform into lithium, then the lithium may move into each layer of the graphite. Because the graphite has a structure including the plurality of layers, even though the lithium is stored in the graphite, protrusions emanating from the negative electrode, i.e., dendrites may not occur. During discharging of the secondary battery 1, the lithium in the graphite at the negative electrode may release electrons to form lithium ions, and the lithium ions may move to the positive electrode through the electrolyte 20. The lithium ions moving to the positive electrode may bond with the transition metal. Because the transition metal may exist in an ionic state with a plurality of charges, when the transition metal forms the bond with the lithium ions, the transition metal may have different charges but may be kept in the ionic state, thereby maintaining structural stability. However, this is an example, and the ions moving during repeated charging and discharging may include sodium ions or any other materials, not lithium ions. Further, the negative electrode material may include any other materials than graphite. In addition, the electrolyte 20 may be in a liquid state, but the electrolyte 20 in a solid state may be used in the secondary battery 1 of the present disclosure.

As shown in FIG. 1, the electrode assembly 10 may include an electrode tab 11. The electrode tab 11 may be connected to each of the positive electrode and the negative electrode of the electrode assembly 10, and be protruded outward from the electrode assembly 10 to become a path of movement of electrons between the inside and outside of the electrode assembly 10. Each of the plurality of electrode tab 11 may be protruded in each different direction of the electrode assembly 10 as shown in FIG. 1, but is not limited thereto, and each of the plurality of electrode tab 11 may be protruded parallel to each other in the same direction or may be protruded in various directions.

The electrode assembly 10 may include the electrode lead 12 connected to the electrode tab 11 to supply electricity to the outside of the secondary battery 1. The electrode lead 12 may be connected to the electrode tab 11 by spot welding.

The electrode assembly 10 may include an insulation portion 13 that surrounds a part of the electrode lead 12. The insulation portion 13 may be located corresponding to a location at which the first sealing portion 920' and the second sealing portion 920" are joined. When the first sealing portion 920' and the second sealing portion 920" are joined to each other, the insulation portion 13 may be located between the first sealing portion 920' and the second sealing portion 920" and adhere the electrode lead 12 to the pouch 900. Additionally, the insulation portion 13 may prevent electricity produced from the electrode assembly 10 from flowing to the pouch 900 through the electrode lead 12, and maintain the sealing of the pouch 900. Accordingly, the insulation portion 13 may be formed as a nonconductor having a nonconductive property in which an electric current does not flow freely. For example, the insulation portion 13 may be an insulating tape that is easy to attach to the electrode lead 12 and has a relatively small thickness. However, the insulation portion 13 is not limited thereto, and may include any member that can insulate the electrode lead 12.

The electrode tab 11 configured to have positive polarity may be referred to as a positive electrode tab, and the electrode tab 11 configured to have negative polarity may be referred to as a negative electrode tab. The electrode lead 12 configured to have positive polarity may be referred to as a positive electrode lead, and the electrode lead 12 configured to have negative polarity may be referred to as a negative electrode lead. One end of the electrode lead 12 may be connected to the electrode tab 11, and the other end may be protruded outward from the pouch 900. That is, the electrode lead 12 may include the positive electrode lead connected, at one end, to the positive electrode tab and extended in the direction in which the positive electrode tab is protruded, and the negative electrode lead connected, at one end, to the negative electrode tab and extended in the direction in which the negative electrode tab is protruded. Meanwhile, the other end of the positive electrode lead and the other end of the negative electrode lead may be protruded outward from the pouch 900. Accordingly, the positive electrode lead and the negative electrode lead may supply electricity produced inside of the electrode assembly 10 to the outside. Additionally, each of the positive electrode tab and the negative electrode tab may be extended toward different directions.

The materials of the positive electrode lead and the negative electrode lead may be different from each other. The positive electrode lead may be made of aluminum that is the same as the positive current collector, and the negative electrode lead may be made of copper or nickel coated copper that is the same as the negative current collector. Additionally, the part of the electrode lead 12 protruded outward from the pouch 900 may act as a terminal portion to electrically connect to an external terminal.

The pouch 900 may be made of a material having high flexibility to receive the electrode assembly 10 therein. When drawing a pouch film 901 having flexibility using a punch (not shown), a part of the pouch film 901 may be stretched to form an accommodation portion 910 having a pocket-shaped accommodation space 910S, thereby manufacturing the pouch 900. The pouch 900 may accommodate the electrode assembly 10 such that the part of the electrode lead 12 is exposed and may be sealed.

When forming the accommodation portion 910 in the pouch film 901, only one accommodation portion 910 may be formed in one pouch film 901, but the present disclosure is not limited thereto, and two accommodation portions 910 may be formed in one pouch film 901 by drawing such that they are adjacent to each other. Thus, as shown in FIG. 1, the two adjacent accommodation portion 910 may be formed. Each accommodation portion 910 may have the same depth, but is not limited thereto, and the depth of each accommodation portion 910 may be different from each other. After the electrode assembly 10 is received in one accommodation portion 910, the pouch 900 may be folded with respect to an axis such that the accommodation portion 910 and the other accommodation portion 910 face each other. Accordingly, the other accommodation portion 910 may accommodate the electrode assembly 10 in the upper side. As the two accommodation portions 910 accommodate one electrode assembly 10, they may accommodate the thicker electrode assembly 10 than a single accommodation portion 910. Additionally, when the pouch 900 is folded, as the first sealing portion 920' and the second sealing portion 920" are integrally connected to each other, the number of sides to seal may be reduced when a sealing process is performed afterwards. Accordingly, it may be possible to speed up the process, and reduce the number of sealing processes.

When the electrode lead 12 is connected to the electrode tab 11 of the electrode assembly 10, and the insulation portion 13 is formed on the part of the electrode lead 12, the electrode assembly 10 may be accommodated in the accommodation space 910S of the accommodation portion 910, and the other accommodation portion 910 may cover the electrode assembly 10. Subsequently, parts of the first sealing portion 920' and the second sealing portion 920" may be sealed, and the electrolyte 20 may be injected into the accommodation space 910S through an unsealed opening between the first sealing portion 920' and the second sealing portion 920". When the electrolyte 20 is injected, a space between the first sealing portion 920' and the second sealing portion 920" may be sealed.

As shown in FIG. 2, the pouch film 901 used to form the sealing portion 920 may include a plurality of layers.

The pouch film 901 may include a sealant layer 905 and a moisture barrier layer 904. The pouch film 901 may include a stretch assisting layer 903 located on the moisture barrier layer 904 and a surface protective layer 902 located on the outer side of the stretch assisting layer.

The sealant layer 905 may be made of a first polymer, and be formed in the innermost layer and come into direct contact with the electrode assembly 10. Here, the innermost layer is the last layer in the direction toward the electrode assembly 10 on the basis of the moisture barrier layer 904. The sealant layer 905 may have insulation because it directly contacts the electrode assembly 10, and may have corrosion resistance because it contacts the electrolyte 20 as well. Additionally, because the sealant layer 905 needs to completely seal the inside to prevent a material from moving between the inside and outside, the sealant layer 905 may have high sealability. That is, the sealing portion 920 formed by adhering the sealant layers 905 together may have high thermal adhesion strength. For example, the first polymer of which the sealant layer 905 is made may include at least one selected from the group consisting of polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, Teflon and glass fiber. In particular, typically, poly olefin-based resin such as polypropylene or polyethylene may be used. The polypropylene has the outstanding mechanical properties such as tensile strength, stiffness, surface hardness, abrasion resistance and heat resistance and chemical properties such as corrosion resistance and may be primarily used in applications using the sealant layer 905. Further, the sealant layer may be made of cast polypropylene, acid modified polypropylene or polypropylene-butylene-ethylene terpolymer. Here, the acid modified polypropylene may be maleic anhydride polypropylene (MAH PP). Additionally, the sealant layer 905 may have a single film structure including at least one material, or a composite film structure including a layer of each of two or more materials.

The thickness of the sealant layer 905 may be from 60 µm to 100 µm, and in particular from 75 µm to 85 µm. In case the thickness of the sealant layer 905 is smaller than 60 µm, during sealing, the inside of the sealant layer 905 may break, resulting in decreased sealing durability. On the contrary, in case the thickness of the sealant layer 905 is larger than 100 µm, the total thickness of the pouch 900 is overly large, and rather, the energy density may be reduced compared to the volume of the secondary battery 1.

The moisture barrier layer 904 may be stacked between the surface protective layer 902 and the sealant layer 905 to ensure the mechanical strength of the pouch 900, and keep gas or moisture from entering or exiting the secondary battery 1, thereby preventing leakage of the electrolyte 20. The moisture barrier layer 904 may be made of metal, and in particular, the moisture barrier layer 904 according to an embodiment of the present disclosure may be made of metal including an alloy number AA80XX aluminum alloy. The aluminum may ensure a predetermined level or more of mechanical strength, be lightweight, compensate for electrical and chemical properties by the electrode assembly 10 and the electrolyte 20 and dissipate heat. The aluminum alloy may include a variety of materials. For example, the aluminum alloy may include at least one selected from the group consisting of iron, copper, chromium, manganese, nickel, magnesium and zinc.

The thickness of the moisture barrier layer 904 may be from 50 µm to 80 µm, and in particular, from 55 µm to 65 µm. In case the thickness of the moisture barrier layer 904 is smaller than 50 µm, formability may be reduced. In this case, when drawing the pouch film 901, there may be a limitation in forming the outer wall of the accommodation portion 910 as vertically as possible to form the accommodation portion 910 with a large depth. In case the thickness of the moisture barrier layer 904 is larger than 80 µm, the manufacturing cost increases, and the total thickness of the secondary battery 1 is overly large, resulting in low energy density compared to the thickness of the secondary battery 1. In case the thickness of the sealant layer 905 is reduced below 60 µm to reduce the total thickness of the secondary battery 1, sealing durability may decrease. As formability of the moisture barrier layer 904 according to an embodiment of the present disclosure is improved, when drawing the pouch film 901, the accommodation portion 910 may be formed with a large depth and the outer wall of the accommodation portion 910 may be as vertical as possible. Then, the volume of the accommodation space 910S may increase, then the volume of the electrode assembly 10 received in the accommodation portion 910 may increase, and energy efficiency may also increase compared to the volume of the secondary battery 1. Additionally, the manufacturing cost may not greatly increase, the thickness of the sealant layer 905 may not reduce, the total thickness of the pouch 900 may not greatly increase, and sealing durability may not decrease.

The surface protective layer 902 is made of a second polymer and formed in the outermost layer to protect the secondary battery 1 from friction and collision with the outside and electrically insulate the electrode assembly 10 from the outside. Here, the outermost layer is the last layer in the opposite direction to the direction in which the electrode assembly 10 is located, on the basis of the moisture barrier layer 904. The second polymer of which the surface protective layer 902 is made may include at least one selected from the group consisting of polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, Teflon and glass fiber. In particular, in many cases, polymer having abrasion resistance and heat resistance, for example, polyethyleneterephthalate (PET) may be primarily used. The surface protective layer 902 may have a single film structure including at least one material, or a composite film structure including a layer of each of two or more materials.

The thickness of the surface protective layer 902 may be from 5 µm to 25 µm, and in particular, from 7 µm to 12 µm. In case the thickness of the surface protective layer 902 is smaller than 5 µm, external insulation may decrease. On the contrary, in case the thickness of the surface protective layer 902 is larger than 25 µm, the total thickness of the pouch 900 increases, and energy density may be reduced compared to the volume of the secondary battery 1.

The polyethyleneterephthalate (PET) is cheap and possesses high durability and electrical insulation, but has weak adhesion with aluminum that is often used for the moisture barrier layer 904 and may exhibit different behaviors when stretched by the applied stress. Accordingly, when the surface protective layer 902 and the moisture barrier layer 904 are directly adhered to each other, the surface protective layer 902 and the moisture barrier layer 904 may be delaminated during draw forming. Accordingly, the moisture barrier layer 904 may not be uniformly stretched, resulting in decreased formability.

The stretch assisting layer 903 may be made of a third polymer, and stacked between the surface protective layer 902 and the moisture barrier layer 904. The stretch assisting layer 903 may be stacked between the surface protective layer 902 and the moisture barrier layer 904 to prevent delamination of the surface protective layer 902 and the moisture barrier layer 904 when stretched. The third polymer of which the stretch assisting layer 903 is made may include at least one selected from the group consisting of polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, Teflon and glass fiber. In particular, the nylon resin easily adheres to the polyethyleneterephthalate (PET) of the surface protective layer 902, and when stretched, exhibits similar behaviors to the aluminum alloy of the moisture barrier layer 904, and accordingly the nylon resin may be primarily used as the third polymer. Additionally, the stretch assisting layer 903 may have a single film structure including any one material or a composite film structure including a layer of each of two or more materials.

The moisture barrier layer 904 according to an embodiment of the present disclosure may have a thickness of approximately 50 µm to 80 µm, and in particular 55 µm to 65 µm, thereby improving formability of the moisture barrier layer 904. In this case, to improve formability, the stretch assisting layer 903 may have a thickness of 20 µm to 50 µm, and in particular 25 µm to 38 µm. In case the thickness of the stretch assisting layer 903 is smaller than 20 µm, the stretch assisting layer 903 fails to keep up with the improved formability of the moisture barrier layer 904, and may be damaged while it is stretched. On the contrary, in case the thickness is larger than 50 µm, the total thickness of the pouch 900 may increase, then the volume of the secondary battery 1 may increase and energy density may decrease. In particular, according to an embodiment of the present disclosure, a thickness ratio of the stretch assisting layer 903 and the moisture barrier layer 904 may be smaller than 1:2.5. However, when the thickness of the stretch assisting layer 1354 is overly large, the total thickness of the pouch 900 increases. To avoid the overly large thickness, the thickness ratio may be larger than 1:1.5. That is, the thickness ratio may be from 1:1.5 to 1:2.5.

As shown in FIG. 2, the first sealing portion 920' may be located adjacent to the second sealing portion 920". The first sealing portion 920' and the second sealing portion 920" may be symmetrical to each other. Because the first sealing portion 920' and the second sealing portion 920" are formed by folding the pouch film 901, the first sealing portion 920' and the second sealing portion 920" located on the opposite sides on the basis of the folded part of the pouch film 901 may face each other and be symmetrical to each other.

When the first sealing portion 920' and the second sealing portion 920" contact each other, the first sealant layer 905 of the first sealing portion 920' and the second sealant layer 905 of the second sealing portion 920" may contact each other. After bringing the first sealing portion 920' and the second sealing portion 920" into contact with each other, when applying heat and pressure, the first sealant layer 905 of the first sealing portion 920' and the second sealant layer 905 of the second sealing portion 920" may be melted and joined to each other. As the first sealing portion 920' and the second sealing portion 920" are located along the edge of the accommodation portion 910, when the first sealing portion 920' and the second sealing portion 920" are joined to each other, the edge of the accommodation portion 910 may be sealed.

After the first sealing portion 920' and the second sealing portion 920" are joined to each other, a degassing process may be performed to remove gases remaining in the sealing portion 920, and a trimming process may be performed to cut unnecessary parts so that the sealing portion 920 has a predetermined width. After the trimming process is performed, the sealing portion 920 may have the predetermined width. A part of the sealing portion 920 may be folded and bent to form the folding portion 922.

As shown in FIG. 3, the sealing portion 920 may include the unfolding portion 921 extended from the accommodation portion 910 and the folding portion 922 extended in a direction that is different from the extension direction of the unfolding portion 921. When the folding portion 922 is formed, the part of the pouch 900 extended outward from the accommodation portion 910 may decrease in width. Accordingly, the volume occupied by the secondary battery 1 may be reduced, and the energy density per volume of the secondary battery 1 may increase. As the electrode lead 12 may be located at the front and rear sides of the pouch 900, the folding portion 922 may be disposed at the left and right sides of the pouch 900 where it is easy to fold the sealing portion 920.

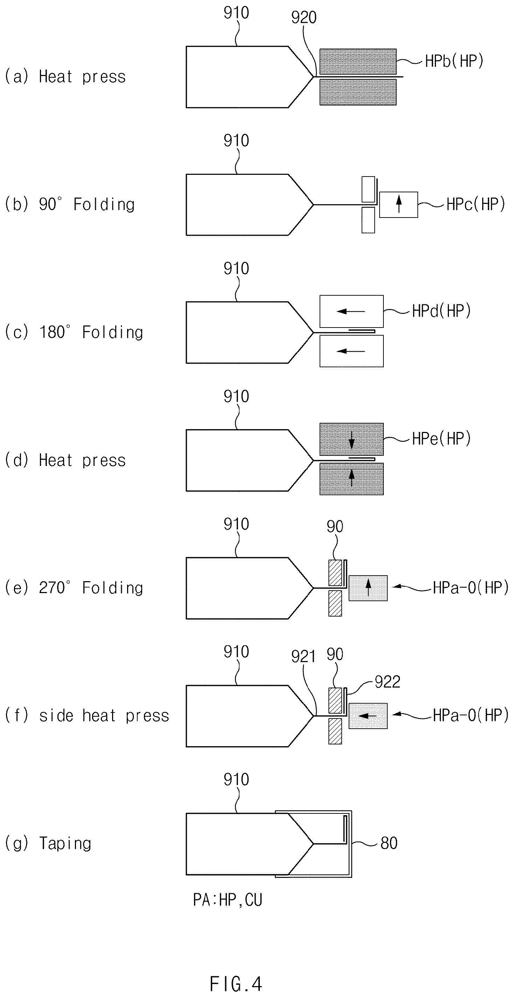

FIG. 4 is a conceptual view showing the step of forming the folding portion 922 through a conventional pouch forming apparatus PA.

The conventional pouch forming apparatus PA and the process of forming the folding portion 922 using the same will be described with reference to FIG. 4.

The pouch forming apparatus PA may include a heat press HP. As shown in FIG. 4, the heat press HP may include a first heat press HPa, a second heat press HPb, a third heat press HPc, a fourth heat press HPd and/or a fifth heat press HPe.

The process of forming the folding portion 922 of the conventional pouch 900 may be as follows.

First, referring to (a) of FIG. 4, the second heat press HPb may apply heat and pressure to the sealing portion 920 of the pouch 900 (the trimming process of cutting the sealing portion 920 of the pouch 900 into a proper length may be performed earlier).

Subsequently, referring to (b) of FIG. 4, the third heat press HPc may be moved upwards to bend at least part of the sealing portion 920 of the pouch 900 with respect to other part. While the third heat press HPc bends the sealing portion 920 of the pouch 900, to make the extension direction of the bent part of the sealing portion 920 of the pouch 900 face upwards, a folding knife 90 may be disposed such that the bent part of the sealing portion 920 of the pouch 900 is located between the folding knife 90 and the third heat press HPc. As shown in (b) of FIG. 4, the extension direction of the bent part of the sealing portion 920 of the pouch 900 may have an angle of approximately 90° with respect to the extension direction of the part of the sealing portion 920 of the pouch 900 extended from the accommodation portion 910.

Subsequently, referring to (c) of FIG. 4, the fourth heat press HPd may apply pressure to cause the bent part of the sealing portion 920 of the pouch 900 to get closer to the accommodation portion 910 of the pouch 900 so that the extension direction of the bent part of the sealing portion 920 of the pouch 900 is parallel to the extension direction of the unbent part. In other words, the fourth heat press HPd may move the end of the bent part of the sealing portion 920 of the pouch 900 by 90° again. As shown in (c) of FIG. 4, the extension direction of the bent part of the sealing portion 920 of the pouch 900 may have an angle of approximately 180° with respect to the extension direction of the part of the sealing portion 920 of the pouch 900 extended from the accommodation portion 910 of the pouch 900. Accordingly, the bent part of the sealing portion 920 of the pouch 900 may overlap the part extended from the accommodation portion 910 of the pouch 900.

Subsequently, referring to (d) of FIG. 4, the fifth heat press HPe may be located above and below the overlapped sealing portion 920 of the pouch 900 to apply heat and/or pressure to the overlapped sealing portion 920 of the pouch 900.

Subsequently, referring to (e) of FIG. 4, the conventional first heat press HPa-0 may bend the heated overlapped sealing portion 920 of the pouch 900 upwards to form the folding portion 922 of the pouch 900. The conventional first heat press HPa-0 may be moved upwards, and accordingly, the end of the overlapped sealing portion 920 of the pouch 900 may be moved 90°. While the conventional first heat press HPa-0 bends the overlapped sealing portion 920 of the pouch 900, to make the folding portion 922 of the pouch 900 face upwards, the folding knife 90 may be disposed such that between the folding portion 922 of the pouch 900 is located the folding knife 90 and the conventional first heat press HPa-0.

Subsequently, referring to (f) of FIG. 4, the conventional first heat press HPa-0 may apply heat and/or pressure to the folding portion 922 of the pouch 900 in a direction in which the folding portion 922 of the pouch 900 gets closer to the accommodation portion 910 of the pouch 900. The conventional first heat press HPa-0 may apply heat and/or pressure to the folding portion 922 of the pouch 900 while in contact with the folding portion 922 of the pouch 900 for about 1.5 seconds.

Subsequently, referring to (g) of FIG. 4, to prevent the folding portion 922 of the pouch 900 from moving, a tape 80 may be provided to connect the folding portion 922 of the pouch 900 to the accommodation portion 910 of the pouch 900 to fix the folding portion 922 of the pouch 900. The folding portion 922 of the pouch 900 may be taped to the accommodation portion 910 of the pouch 900 by the tape 80. That is, at least part of the folding portion 922 of the pouch 900 may be taped. Accordingly, the sealing portion 920 of the pouch 900 of the secondary battery 1 may be as close to the accommodation portion 910 of the pouch 900 as possible.

However, through this process, the folding portion 922 of the pouch 900 that is not fixed by the tape 80 may move away from the accommodation portion 910 of the pouch 900. In particular, the pouch film 901 may include the moisture barrier layer 904, and the moisture barrier layer 904 may include metal, for example, aluminum, so spring back phenomenon that is the tendency of the metal to return to its shape before the forming by elasticity may occur. An untaped part of the folding portion 922 of the pouch 900 may be moved in a direction facing away from the accommodation portion 910 of the pouch 900. Accordingly, the folding portion 922 of the pouch 900 may not be constantly located at the accommodation portion 910 of the pouch 900. In this case, the untaped part of the folding portion 922 of the pouch 900 may be away from the accommodation portion 910 of the pouch 900, thereby increasing the volume occupied by the secondary battery 1, and when aligning the plurality of secondary batteries 1, the volume occupied by the secondary battery 1 per unit volume may increase. Further, when the plurality of secondary batteries 1 is accommodated in a module case (not shown) such that the folding portion 922 of the plurality of secondary batteries 1 faces upwards or downwards, the folding portion 922 of the pouch 900 may be unfolded, and the folding portion 922 of the pouch 900 may come into contact with a top plate (not shown) of the module case (not shown) located on the folding portion 922 of the pouch 900. Electric leakage may occur in the top plate of the module case, and when the folding portion 922 of the pouch 900 contacts the top plate of the module case, the electric current flowing in the top plate may flow to the electrode assembly 10 through the folding portion 922 of the pouch 900, causing the secondary battery 1 failure. This phenomenon may be caused by elasticity of the moisture barrier layer 904, and may be caused by a temporary attachment region 905b of the sealant layer 905 created when forming the sealing portion 920 of the pouch 900. When forming the sealing portion 920 of the pouch 900, the sealant layer 905 may be subjected to heat and/or pressure. A uniform thickness area of the sealant layer 905 of the sealing portion 920 of the pouch 900 may be referred to as a sealing region 905a, and a nonuniform thickness area of the sealant layer 905 may be referred to as the temporary attachment region 905b. The temporary attachment region 905b may prevent the entire folding portion 922 of the pouch 900 from bending at a preset angle. It is because when the temporary attachment region 905b is thicker than the sealing region 905a, the moisture barrier layer 904 located at the outer side of the sealing region 905a has a curvature, inducing deformation of the entire folding portion 922 of the pouch 900 (see FIG. 7). Accordingly, it is necessary to keep the thickness of the temporary attachment region 905b constant.

Further, during forming of the folding portion 922 of the pouch 900, the sealant layer 905 may bend, and when the sealant layer 905 is formed from polypropylene, because the polypropylene may have brittleness, cracks may occur when the sealant layer 905 bends. Because it has electrical insulation, the sealant layer 905 may prevent the movement of electricity produced from the electrode assembly 10 to the moisture barrier layer 904, but when cracks occur in the sealant layer 905, the electrolyte 20 may move through the cracks and meet the moisture barrier layer 904. In this case, electricity produced from the electrode assembly 10 may flow to the moisture barrier layer 904 through the electrolyte 20. Because it may include a metal, for example, aluminum, the moisture barrier layer 904 conducts electricity. When the moisture barrier layer 904 conducts electricity, there is a risk that electric shock will occur in the event that a user touches the secondary battery 1 or the battery module formed by stacking of the secondary batteries 1.

Accordingly, to prevent this, in the process described with reference to (e) of FIG. 4 and (f) of FIG. 4 in the process of forming the folding portion 922 of the conventional pouch 900, as shown in FIG. 4, a process of applying heat and pressure to one surface of the folding portion 922 of the pouch 900 may be performed. It is because cracks in the sealant layer 905, if any, may disappear when the sealant layer 905 is heated by the transferred high temperature by applying heat and/or pressure to the folding portion 922 of the pouch 900. However, as shown in Table below, when the first heat press HPa applies heat while in contact with the outer surface of the folding portion 922 of the conventional pouch 900, the heat may not be transferred to the sealant layer 905 of the hinge portion 923 of the pouch 900 enough to eliminate cracks in the sealant layer 905 of the hinge portion 923 (see FIG. 7) of the pouch 900 connecting the folding portion 922 of the pouch 900 and the unfolding portion 921 of the pouch 900.

As bending takes place in the hinge portion 923 of the pouch 900, there is a high likelihood that cracks in the sealant layer 905 will occur at the hinge portion 923 of the pouch 900. Accordingly, it is necessary to apply heat to the sealant layer 905 of the hinge portion 923 of the pouch 900. The following Table 1 summarizes the experimental results of temperature changes of the hinge portion 923 of the pouch 900 and the folding portion 922 of the pouch 900 over time while the heat press HP is in direct contact with the outer surface of the folding portion 922 of the pouch 900 when the temperature of the heat press HP is 170°C.

**[Table 1]**

| Tact time (sec) | Hinge portion 923 (°C) | Folding portion 922 (°C) |
|---|---|---|
| 0 | 26.85 | 29.9 |
| 1 | 27.1 | 30.8 |
| 3 | 30.8 | 106 |
| 10 | 75.3 | 121.6 |
| ... | | |
| 50 | 95.1 | 119 |

As can be seen from the above Table 1, when the tact time, i.e., the time of contact between the heat press HP and the outer surface of the folding portion 922 of the pouch 900 is 3 seconds or less, the temperature of the hinge portion 923 of the pouch 900 may reach temperature that is slightly higher than room temperature. This temperature may be insufficient to heat at least part of the sealant layer 905 of the hinge portion 923 of the pouch 900, and accordingly, it may be difficult to eliminate cracks in the hinge portion 923 of the pouch 900.

Further, the increased tact time may increase the temperature of the hinge portion 923 of the pouch 900, but as the tact time increases, the process time increases, and the production amount per time decreases, leading to low production efficiency. Accordingly, it is necessary to raise the temperature of the hinge portion 923 of the pouch 900 without increase in tact time.

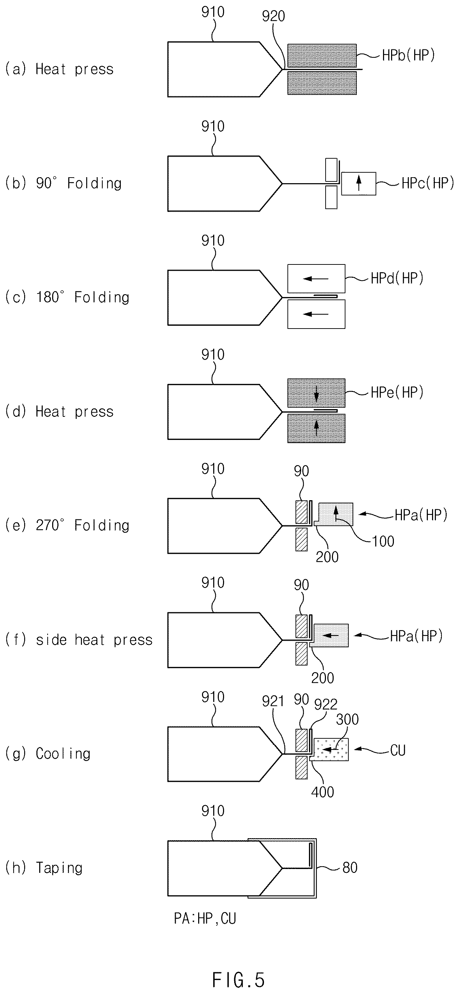

FIG. 5 is a conceptual view showing the step of forming the folding portion 922 of the pouch 900 through the pouch forming apparatus PA of the present disclosure.

The pouch forming apparatus PA according to an embodiment of the present disclosure and the process of forming the folding portion 922 of the pouch 900 using the same will be described with reference to FIG. 5.

In the process of forming the folding portion 922 of the pouch 900 described with reference to FIG. 4, the description of (a), (b), (c) and (d) of FIG. 4 may be equally applied to the pouch forming apparatus PA of the present disclosure and the process of forming the folding portion 922 of the pouch 900 using the same (see (a), (b), (c) and (d) of FIG. 5).

As described previously, the conventional first heat press HPa-0 does not directly heat the hinge portion 923 of the pouch 900, and fails to transfer a large amount of heat to the hinge portion 923 of the pouch 900. To solve this problem, according to the present disclosure, the first heat press HPa may directly heat the hinge portion 923 of the pouch 900 while the first heat press HPa applies pressure to the folding portion 922 of the pouch 900.

As shown in (f) of FIG. 5, the first heat press HPa may contact the folding portion 922 of the pouch 900 and the hinge portion 923 of the pouch 900 at the same time. Accordingly, the first heat press HPa may directly apply heat to the hinge portion 923 of the pouch 900. To this end, the first heat press HPa may include a protruded part.

As shown in (e) of FIG. 5, the first heat press HPa may form the folding portion 922 of the pouch 900. The process of forming the folding portion 922 of the pouch 900 described with reference to (e) of FIG. 5 has the same principle as the process of forming the folding portion 922 of the pouch 900 described with reference to (e) of FIG. 4, but there is a difference in applying pressure to the sealing portion 920 of the pouch 900 to form the folding portion 922 of the pouch 900 due to a difference in shape of the first heat press HPa between the present disclosure and the conventional art.

Further, after applying heat to the hinge portion 923 of the pouch 900, as shown in (g) of FIG. 5, the hinge portion 923 of the pouch 900 may be cooled by a cooling unit CU. The moisture barrier layer 904 and/or the sealant layer 905 may become more plastic than becoming elastic when the temperature falls. Accordingly, it may be possible to reduce spring back that is a phenomenon in which the folding portion 922 of the pouch 900 is away from the accommodation portion 910 of the pouch 900. Along with the cooling unit CU, the secondary battery 1 may be moved to a location at which the taping process is performed. However, the process of cooling the hinge portion 923 of the pouch 900 described with reference to FIG. 5(g) may be omitted depending on the embodiments.

Subsequently, as shown in FIG. 5(h), the folding portion 922 of the pouch 900 may be fixed to the accommodation portion 910 of the pouch 900 by taping. This may be the same as the description made with reference to FIG. 4(g).

Although the present disclosure has been hereinabove described as being applied to the first heat press HPa, this is only for convenience of description, and the present disclosure may be applied to the heat press HP that is used to any method for forming the pouch 900. Accordingly, the following description is made based on that the aspect of the present disclosure applied to the first heat press HPa is applied to the heat press HP.

To sum, the pouch forming apparatus PA of the present disclosure may be configured to form the pouch 900 including the accommodation portion 910 configured to accommodate the electrode assembly 10 and the sealing portion 920 extended from the accommodation portion 910, and may include the heat press HP configured to apply pressure to the sealing portion 920 of the pouch 900 to bend at least part of the sealing portion 920 of the pouch 900 to form the unfolding portion 921 of the pouch 900 extended from the accommodation portion 910 of the pouch 900, and the folding portion 922 of the pouch 900 extended in the direction that is different from the direction in which the unfolding portion 921 of the pouch 900 is extended. The heat press HP may include a main heat press 100 configured to apply pressure to the folding portion 922 of the pouch 900 and a sub heat press 200 configured to apply heat to the hinge portion 923 (see FIG. 7) of the pouch 900 connecting the unfolding portion 921 of the pouch 900 and the folding portion 922 of the pouch 900 while the main heat press 100 applies pressure to the folding portion 922 of the pouch 900.

It will be described in further detail below.

### First embodiment

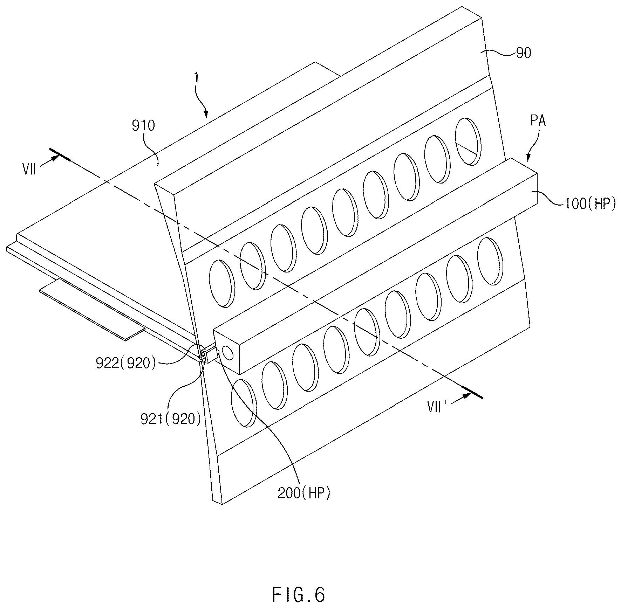

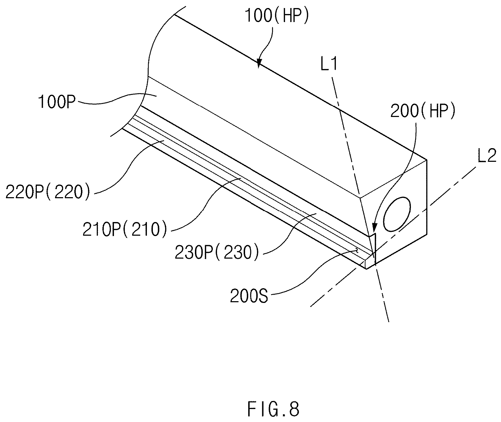

FIG. 6 is a perspective view showing that the heat press HP of the pouch forming apparatus PA according to the first embodiment heats the hinge portion 923 of the pouch 900. FIG. 7 is an enlarged cross-sectional view showing the heat press HP and the secondary battery 1 shown in FIG. 6, taken along the line VII-VII'. FIG. 8 is a perspective view showing the heat press HP shown in FIG. 6.

The heat press HP of the pouch forming apparatus PA according to the first embodiment of the present disclosure and the secondary battery 1 formed by the same will be described with reference to FIGS. 6 to 8. For convenience, the following description is made under the assumption that the process described with reference to (f) of FIG. 5 is being performed.

As shown in FIG. 6, the secondary battery 1 may include the pouch 900 including the accommodation portion 910 of the pouch 900 configured to accommodate the electrode assembly 10 and the sealing portion 920 of the pouch 900 extended from the accommodation portion 910 of the pouch 900. The pouch forming apparatus PA may include the heat press HP configured to apply pressure to the sealing portion 920 of the pouch 900 to bend at least part of the sealing portion 920 of the pouch 900 to form the unfolding portion 921 of the pouch 900 extended from the accommodation portion 910 of the pouch 900 and the folding portion 922 of the pouch 900 extended in the direction that is different from the direction in which the unfolding portion 921 of the pouch 900 is extended.

The heat press HP may be located to apply heat and/or pressure to the folding portion 922 of the pouch 900 toward the accommodation portion 910 of the pouch 900. The heat press HP may be located on one side of the folding portion 922 of the pouch 900 and the folding knife 90 may be located on the other side so that the folding portion 922 of the pouch 900 may be extended at the predetermined angle with respect to the unfolding portion 921 of the pouch 900.

As shown in FIG. 7, the heat press HP may include the main heat press 100 configured to apply pressure to the folding portion 922 of the pouch 900. The heat press HP may include the sub heat press 200 configured to apply heat to the hinge portion 923 of the pouch 900 connecting the unfolding portion 921 of the pouch 900 and the folding portion 922 of the pouch 900 while the main heat press 100 applies pressure to the folding portion 922 of the pouch 900. The sub heat press 200 may be coupled to the main heat press 100. However, the sub heat press 200 is not limited thereto and may be integrally formed in the main heat press 100.

As shown in FIG. 8, the sub heat press 200 may be extended in the direction that is different from the extension direction of the main heat press 100. As shown in FIG. 7, when the extension direction of the main heat press 100 is the up-down direction, the sub heat press 200 may be extended rightwards. More specifically, the sub heat press 200 may have a "L" shape.

As shown in FIGS. 7 and 8, the main heat press 100 may have a pressing surface 100P configured to apply pressure to the folding portion 922 of the pouch 900. The pressing surface 100P may be configured to contact the folding portion 922 of the pouch 900 to heat the folding portion 922 of the pouch 900. The pressing surface 100P may prevent the folding portion 922 of the pouch 900 from moving in the direction facing away from the accommodation portion 910 of the pouch 900. The pressing surface 100P may be extended parallel to the direction in which the outer surface of the folding portion 922 of the pouch 900 is extended. However, the present disclosure is not limited thereto, and the pressing surface 100P may not apply pressure to the folding portion 922 of the pouch 900, and only a folding heating surface 230P of the sub heat press 200 as described below may apply pressure to the folding portion 922 of the pouch 900. In this case, the description of the pressing surface 100P may be equally applied to the folding heating surface 230P.

The sub heat press 200 may have a hinge heating surface 210P that contacts the hinge portion 923 of the pouch 900 while the pressing surface 100P of the main heat press 100 contacts the folding portion 922 of the pouch 900. The hinge heating surface 210P may be configured to contact the hinge portion 923 of the pouch 900 to heat the hinge portion 923 of the pouch 900. More specifically, the sub heat press 200 may include a hinge heating portion 210 configured to contact the hinge portion 923 of the pouch 900 so that the hinge portion 923 of the pouch 900 may directly receive heat from the sub heat press 200. The hinge heating portion 210 may have the hinge heating surface 210P configured to contact the hinge portion 923 of the pouch 900.

The hinge heating surface 210P may be formed to conform to the shape of the hinge portion 923 of the pouch 900. As the hinge portion 923 of the pouch 900 is a portion where bending is done, the hinge portion 923 may have a shape having a curvature, and when the hinge heating portion 210 has the hinge heating surface 210P corresponding to the hinge portion 923 of the pouch 900, the hinge heating portion 210 may not only contact a part of the hinge portion 923 of the pouch 900, but also may contact the entire hinge portion 923 of the pouch 900. Accordingly, heat generated from the hinge heating portion 210 may be efficiently transferred to the hinge portion 923 of the pouch 900. The hinge portion 923 of the pouch 900 may be configured to reach the temperature at which the sealant layer 905 will become soft or cracks will disappear by the sub heat press 200 while the main heat press 100 applies pressure to the folding portion 922 of the pouch 900.

The hinge heating surface 210P may be bent between the folding heating surface 230P and an unfolding heating surface 220P.

As the hinge portion 923 of the pouch 900 may be located below the folding portion 922 of the pouch 900, the hinge heating portion 210 may be located below the pressing surface 100P of the main heat press 100. As the hinge portion 923 of the pouch 900 is the bent part of the sealing portion 920 of the pouch 900 by the formation of the folding portion 922 of the pouch 900, the hinge portion 923 of the pouch 900 may be further extended toward the accommodation portion 910 of the pouch 900 than the folding portion 922 of the pouch 900. Accordingly, the hinge heating portion 210 may be further extended toward the accommodation portion 910 of the pouch 900 than the pressing surface 100P of the main heat press 100.

The sub heat press 200 may include an unfolding heating portion 220 extended from the hinge heating portion 210 to come into contact with the unfolding portion 921 of the pouch 900 to heat the unfolding portion 921 of the pouch 900. The unfolding heating portion 220 may be extended toward the accommodation portion 910 of the pouch 900. The unfolding portion 921 of the pouch 900 may be connected to the hinge portion 923 of the pouch 900. Accordingly, when heating the unfolding portion 921 of the pouch 900, heat transferred to the unfolding portion 921 of the pouch 900 may be transferred to the hinge portion 923 of the pouch 900 and increase the temperature of the hinge portion 923 of the pouch 900. While the unfolding heating portion 220 heats the unfolding portion 921 of the pouch 900, the temperature of the hinge portion 923 of the pouch 900 may rise.

The unfolding heating portion 220 may be located adjacent to the lower end of the main heat press 100 so that it is located below the unfolding portion 921 of the pouch 900 in order to prevent the unfolding portion 921 of the pouch 900 from moving toward the gravity direction. The unfolding portion 921 of the pouch 900 may be supported by the unfolding heating portion 220 so that the angle between the unfolding portion 921 and the folding portion 922 of the pouch 900 may be close to the preset angle.

The unfolding heating portion 220 may have the unfolding heating surface 220P facing the unfolding portion 921 of the pouch 900. The unfolding heating surface 220P may be extended perpendicularly to the extension direction of the pressing surface 100P. As the extension direction of the folding portion 922 of the pouch 900 may be perpendicular to the unfolding portion 921 of the pouch 900, the unfolding heating surface 220P may be perpendicular to the pressing surface 100P so that the angle between the unfolding portion 921 of the pouch 900 and the folding portion 922 of the pouch 900 may be maintained at the preset angle.

The unfolding heating surface 220P may be extended at a predetermined angle with respect to a direction perpendicular to the gravity direction. As shown in FIG. 7, the unfolding heating surface 220P may be extended at a predetermined angle with respect to the left and right directions. Accordingly, the unfolding portion 921 of the pouch 900 supported by the unfolding heating portion 220 may be extended at the predetermined angle with respect to the extension direction of the accommodation portion 910 of the pouch 900. As shown in FIG. 7, the unfolding portion 921 of the pouch 900 may be extended upwards as it goes to the right. That is, the folding heating surface 230P as described below may be extended at the predetermined angle with respect to the vertical direction. The sealing portion 920 of the pouch 900 may deform, for example, sag in the gravity direction under the influence of the gravity. When the unfolding portion 921 of the pouch 900 is extended toward a direction across the direction perpendicular to the gravity direction from initial forming, even though the unfolding portion 921 of the pouch 900 deforms, for example, sags in the gravity direction by the gravity afterwards, the extension direction of the unfolding portion 921 of the pouch 900 may be approximately horizontal. Accordingly, the folding portion 920 may be extended parallel to the gravity direction.

The sub heat press 200 may include a folding heating portion 230 extended from the hinge heating portion 210 to come into contact with the folding portion 922 of the pouch 900 to heat the folding portion 922 of the pouch 900. Accordingly, the sub heat press 200 may apply heat and/or pressure to all the folding portion 922 of the pouch 900, the hinge portion 923 of the pouch 900 and the unfolding portion 921 of the pouch 900.

The folding heating portion 230 may have the folding heating surface 230P configured to contact the folding portion 922 of the pouch 900 to heat the folding portion 922 of the pouch 900. The folding heating surface 230P may be parallel to the pressing surface 100P. Accordingly, the sub heat press 200 may cover the main heat press 100 and a part of the sealing portion 920 of the pouch 900.

Further, as shown in FIG. 7, when the folding portion 922 of the pouch 900 includes a first folding portion 922a extended from the unfolding portion 921 of the pouch 900, a second folding portion 922b facing the first folding portion 922a and a third folding portion 922c connecting the first folding portion 922a and the second folding portion 922b, the folding heating surface 230P may apply heat and/or pressure to the outer surface of the first folding portion 922a. In other words, the sub heat press 200 may be configured to heat the hinge portion 923 of the pouch 900 while the first folding portion 922a extended from the unfolding portion 921 of the pouch 900 is pressed toward the accommodation portion 910 of the pouch 900 by the main heat press 100, the first folding portion 922a being further spaced apart from the accommodation portion 910 of the pouch 900 than the second folding portion 922b located adjacent to the accommodation portion 910 of the pouch 900.

As described above, the relationship between the sub heat press 200 and the hinge portion 923 of the pouch 900 may be seen from the perspective of the protruding shape, but may be seen from the perspective of space as described below.

As the sub heat press 200 is extended in the different direction from the main heat press 100, a hinge heating space 200S that can accommodate the hinge portion 923 of the pouch 900 may be defined. The hinge heating space 200S may be formed to conform to the shape of the hinge portion 923 of the pouch 900. The hinge heating space 200S may be concave in a direction facing away from the hinge portion 923 of the pouch 900 so as to correspond to the hinge portion 923 of the pouch 900.

When viewing the sub heat press 200 from the perspective of the hinge heating space 200S, the hinge heating space 200S may be regarded as a groove. For example, as shown in FIG. 7, when the conventional heat press HP has a shape of a cuboidal block, the heat press HP of the present disclosure may carry out the thought by forming the hinge heating space 200S in the cuboid. That is, the hinge heating space 200S may be formed by forming the groove in the conventional heat press HP.

As described above, the hinge heating space 200S may be configured such that the folding heating surface 230P is inclined with respect to the edge of the press, so that the folding heating surface 230P and the unfolding heating surface 220P have a vertical relationship.

In addition, the sub heat press 200 may be coupled to the main heat press 100 separably from the main heat press 100. Accordingly, when the sub heat press 200 fails, the service may be continued by replacing only the sub heat press 200 without needing to replace the entire heat press HP.

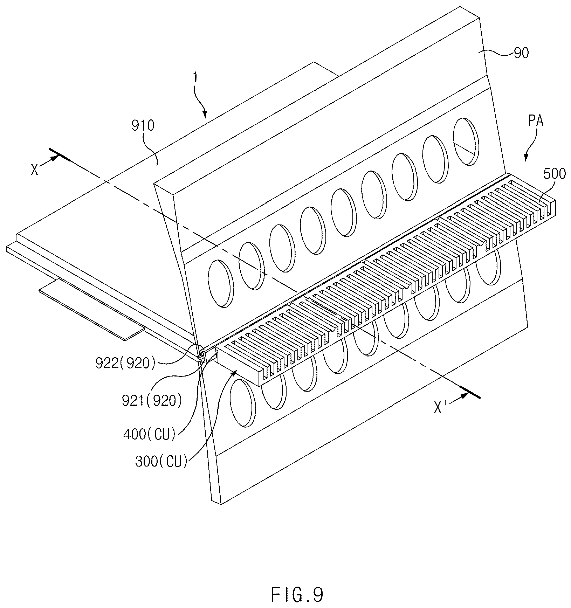

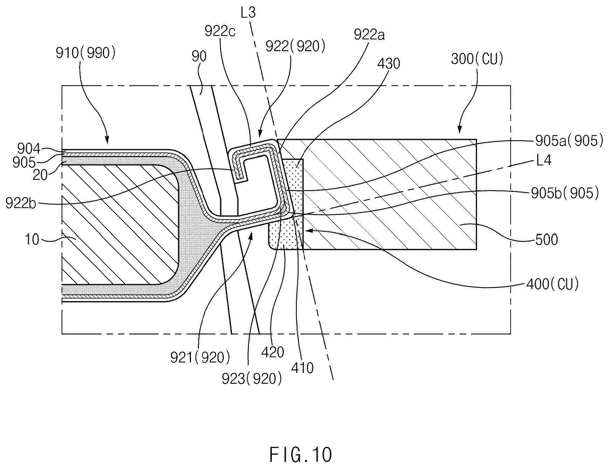

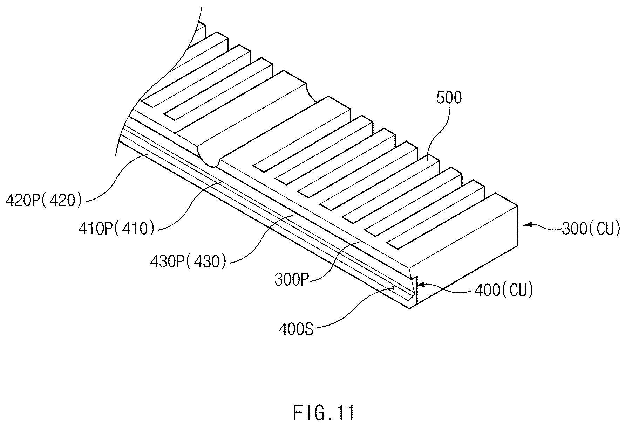

FIG. 9 is a perspective view showing that the cooling unit CU of the pouch forming apparatus PA according to the first embodiment cools the hinge portion 923 of the pouch 900. FIG. 10 is an enlarged cross-sectional view showing the cooling unit CU and the secondary battery 1 shown in FIG. 9, taken along the line X-X'. FIG. 11 is a perspective view showing the cooling unit CU shown in FIG. 9.

The cooling unit CU of the pouch forming apparatus PA according to the first embodiment of the present disclosure and the secondary battery 1 formed by the same will be described with reference to FIGS. 9 to 11. For convenience, the following description is made under the assumption that the process described with reference to (g) of FIG. 5 is being performed.

After forming the folding portion 922 of the pouch 900 such that it is extended at the preset angle with the extension direction of the unfolding portion 921 of the pouch 900 as described with reference to FIGS. 6 to 8, the hinge portion 923 of the pouch 900 may be cooled by the cooling unit CU as shown in FIG. 9. At least part of the sealant layer 905 of the hinge portion 923 of the pouch 900 may be heated or become flowable accordingly while the hinge portion 923 of the pouch 900 contacts the heat press HP. When the sealant layer 905 becomes flowable, because it deforms more easily than in hardened condition, the shape may be changed more easily by the tendency of the moisture barrier layer 904 to deform. Accordingly, when heating the hinge portion 923 of the pouch 900 and then cooling again, spring back phenomenon that is the tendency of the folding portion 922 of the pouch 900 to return to its shape before the forming may be prevented.

The cooling unit CU may be configured to contact the hinge portion 923 of the pouch 900 to allow the hinge portion 923 of the pouch 900 to dissipate heat. In other words, the cooling unit CU may be configured to cool the sealing portion 920 of the pouch 900 to prevent a change in angle between the unfolding portion 921 of the pouch 900 and the folding portion 922 of the pouch 900 after the folding portion 922 of the pouch 900 is formed. The cooling unit CU may include a cooling fin 500 to release heat from the cooling unit CU out of the cooling unit CU. The cooling fin 500 may include a plurality of cooling fins to increase the surface area of the cooling unit CU. The heat moving from the hinge portion 923 of the pouch 900 to the cooling unit CU may be moved out of the cooling unit CU through the cooling fin 500. In other words, the cooling fin 500 may be configured to dissipate heat from the sealing portion 920 of the pouch 900.

The folding portion 922 of the pouch 900 may contact the cooling unit CU at one side and the folding knife 90 at the other side to prevent changes of the formed shape. The folding portion 922 of the pouch 900 may be located between the cooling unit CU and the folding knife 90 to prevent changes of the shape.

As shown in FIG. 10, the cooling unit may include a main cooling unit 300 configured to support the folding portion 922 of the pouch 900. The cooling unit CU may include a sub cooling unit 400 configured to cool the hinge portion 923 of the pouch 900 connecting the unfolding portion 921 and the folding portion 922 of the pouch 900 while the main cooling unit 300 supports the folding portion 922 of the pouch 900. The sub cooling unit 400 may be coupled to the main heat press 100. However, the sub cooling unit 400 is not limited thereto and may be integrally formed in the main cooling unit 300.

As shown in FIG. 11, the sub cooling unit 400 may be extended in a direction that is different from the extension direction of the main cooling unit 300. When the extension direction of the main cooling unit 300 is the up-down direction, the sub cooling unit 400 may be extended rightwards. More specifically, the sub cooling unit 400 may have a "L" shape.

The main cooling unit 300 may include the plurality of cooling fins 500. The cooling fin 500 may increase the surface area of the main cooling unit 300. The heat from the hinge portion 923 of the pouch 900 may move to the main cooling unit 300 through the sub cooling unit 400, and out of the cooling unit CU through the cooling fin 500 of the main cooling unit 300.

The shape of the main cooling unit 300 may correspond to the shape of the main heat press 100 described with reference to FIGS. 6 to 8, and the shape of the sub cooling unit 400 may correspond to the shape of the sub heat press 200 described with reference to FIGS. 6 to 8. It is because the shape of the folding portion 922 of the pouch 900 formed by folding the sealing portion 920 of the pouch 900 by the heat press HP may be the same as the shape of the folding portion 922 of the pouch 900 to be maintained by the cooling unit CU. Accordingly, the following description of the main cooling unit 300 and the sub cooling unit 400 may correspond to the description of the main heat press 100 and the sub heat press 200.

As shown in FIGS. 10 and 11, the main cooling unit 300 may have a support surface 300P configured to support the folding portion 922 of the pouch 900. The support surface 300P may be configured to contact the folding portion 922 of the pouch 900 to support the folding portion 922 of the pouch 900. The support surface 300P may prevent the folding portion 922 of the pouch 900 from moving in the direction facing away from the accommodation portion 910 of the pouch 900. The support surface 300P may be extended parallel to the direction in which the outer surface of the folding portion 922 of the pouch 900 is extended.

The sub cooling unit 400 may have a hinge cooling surface 410P that contacts the hinge portion 923 of the pouch 900 while the pressing surface 100P of the main cooling unit 300 contacts the folding portion 922 of the pouch 900. The hinge cooling surface 410P may be configured to contact the hinge portion 923 of the pouch 900 to cool the hinge portion 923 of the pouch 900. More specifically, the sub cooling unit 400 may include a hinge cooling portion 410 configured to contact the hinge portion 923 of the pouch 900 so that the hinge portion 923 of the pouch 900 may directly receive heat from the sub cooling unit 400. The hinge cooling portion 410 may have the hinge cooling surface 410P configured to contact the hinge portion 923 of the pouch 900.

The hinge cooling surface 410P may be formed to conform to the shape of the hinge portion 923 of the pouch 900. As the hinge portion 923 of the pouch 900 is where bending is done, the hinge portion 923 may have a shape having a curvature, and when the hinge cooling portion 410 has the hinge cooling surface 410P corresponding to the hinge portion 923 of the pouch 900, the hinge cooling portion 410 may not only contact a part of the hinge portion 923 of the pouch 900, but also may contact the entire hinge portion 923 of the pouch 900. Accordingly, heat generated from the hinge cooling portion 410 may be efficiently transferred to the hinge portion 923 of the pouch 900. The hinge portion 923 of the pouch 900 may be configured to reach the temperature at which the sealant layer 905 is not deformed by the sub cooling unit 400 while the main cooling unit 300 supports the folding portion 922 of the pouch 900.

The hinge cooling surface 410P may be bent between a folding cooling surface 430P and an unfolding cooling surface 420P.

As the hinge portion 923 of the pouch 900 may be located below the folding portion 922 of the pouch 900, the hinge cooling portion 410 may be located below the pressing surface 100P of the main cooling unit 300. As the hinge portion 923 of the pouch 900 is the bent part of the sealing portion 920 of the pouch 900 by the formation of the folding portion 922 of the pouch 900, the hinge portion 923 of the pouch 900 may be further extended toward the accommodation portion 910 of the pouch 900 than the folding portion 922 of the pouch 900. Accordingly, the hinge cooling portion 410 may be further extended toward the accommodation portion 910 of the pouch 900 than the pressing surface 100P of the main cooling unit 300.

The sub cooling unit 400 may include an unfolding cooling portion 420 extended from the hinge cooling portion 410 to come into contact with the unfolding portion 921 of the pouch 900 to cool the unfolding portion 921 of the pouch 900. The unfolding cooling portion 420 may be extended toward the accommodation portion 910 of the pouch 900. The unfolding portion 921 of the pouch 900 may be connected to the hinge portion 923 of the pouch 900. Accordingly, when cooling the unfolding portion 921 of the pouch 900, heat transfer from the hinge portion 923 of the pouch 900 to the unfolding portion 921 of the pouch 900 may reduce the temperature of the hinge portion 923 of the pouch 900. While the unfolding cooling portion 420 cools the unfolding portion 921 of the pouch 900, the temperature of the hinge portion 923 of the pouch 900 may decrease.

The unfolding cooling portion 420 may be located adjacent to the lower end of the main cooling unit 300 so that it is located below the unfolding portion 921 of the pouch 900 in order to prevent the unfolding portion 921 of the pouch 900 from moving toward the gravity direction. When the unfolding portion 921 of the pouch 900 is supported by the unfolding cooling portion 420, the angle between the unfolding portion 921 and the folding portion 922 of the pouch 900 may be close to the preset angle.

The unfolding cooling portion 420 may have the unfolding cooling surface 420P facing the unfolding portion 921 of the pouch 900. The unfolding cooling surface 420P may be extended perpendicularly to the extension direction of the pressing surface 100P. As the extension direction of the folding portion 922 of the pouch 900 may be perpendicular to the unfolding portion 921 of the pouch 900, the unfolding cooling surface 420P may be perpendicular to the pressing surface 100P to maintain the preset angle with respect to the folding portion 922.

The sub cooling unit 400 may include a folding cooling portion 430 extended from the hinge cooling portion 410 to come into contact with the folding portion 922 of the pouch 900 to cool the folding portion 922 of the pouch 900. Accordingly, the sub cooling unit 400 may cool and/or support all the folding portion 922 of the pouch 900, the hinge portion 923 of the pouch 900 and the unfolding portion 921 of the pouch 900.

The folding cooling portion 430 may have the folding cooling surface 430P configured to contact the folding portion 922 of the pouch 900 to heat the folding portion 922 of the pouch 900. The folding cooling surface 430P may be parallel to the pressing surface 100P. Accordingly, the sub cooling unit 400 may cover the main cooling unit 300 and a part of the sealing portion 920 of the pouch 900.

Further, as shown in FIG. 10, when the folding portion 922 of the pouch 900 includes the first folding portion 922a extended from the unfolding portion 921 of the pouch 900, the second folding portion 922b facing the first folding portion 922a, and the third folding portion 922c connecting the first folding portion 922a and the second folding portion 922b, the folding cooling surface 430P may cool and/or support the outer surface of the first folding portion 922a. In other words, the sub cooling unit 400 may be configured to cool the hinge portion 923 of the pouch 900 while the first folding portion 922a extended from the unfolding portion 921 of the pouch 900 supports the accommodation portion 910 of the pouch 900 by the main cooling unit 300, the first folding portion 922a being further spaced apart from the accommodation portion 910 of the pouch 900 than the second folding portion 922b located adjacent to the accommodation portion 910 of the pouch 900.

As the sub cooling unit 400 contacts the hinge portion 923 of the pouch 900, when the cooling unit CU while in contact with the hinge portion 923 of the pouch 900 is moved to the taping location, vibration may occur in the cooling unit CU. The vibration occurred in the cooling unit CU may apply shocks to the hinge portion 923 of the pouch 900, and as a consequence, cracks may occur in the hinge portion 923 of the pouch 900, so there is a need to prevent this. Accordingly, the sub cooling unit 400 may include an elastic material. More specifically, the sub cooling unit 400 may include a silicone material to prevent shock transmission to the hinge portion 923 of the pouch 900. Further, the sub cooling unit 400 needs to have elasticity to prevent shocks on the hinge portion 923 of the pouch 900, and transfer heat rapidly from the hinge portion 923 of the pouch 900 out of the cooling unit CU. Accordingly, the sub cooling unit 400 may include a silicone synthetic material. The sub cooling unit 400 may include Silicone Based Conductive Elastomer.

As described above, the relationship between the sub cooling unit 400 and the hinge portion 923 of the pouch 900 may be seen from the perspective of the protruding shape, but may be seen from the perspective of space as described below.

As the sub cooling unit 400 is extended in a different direction from the main cooling unit 300, a hinge cooling space 400S that can accommodate the hinge portion 923 of the pouch 900 may be defined. The hinge cooling space 400S may be formed to conform to the shape of the hinge portion 923 of the pouch 900. The hinge cooling space 400S may be concave in the direction facing away from the hinge portion 923 of the pouch 900 so as to correspond to the hinge portion 923 of the pouch 900.

When viewing the hinge cooling space 400S from the perspective of the sub cooling unit 400, the hinge cooling space 400S may be regarded as a groove.

The hinge cooling space 400S may be configured such that the folding cooling surface 430P is inclined with respect to the edge of the cooling unit CU, so that the folding cooling surface 430P and the unfolding cooling surface 420P have a vertical relationship as described previously.

In addition, the sub cooling unit 400 may be coupled to the main cooling unit 300 separably from the main cooling unit 300. Accordingly, when the sub cooling unit 400 fails, the service may be continued by replacing only the sub cooling unit 400 without needing to replace the entire cooling unit CU.

The cooling unit CU described above may not be included in the pouch forming apparatus PA. For convenience, the embodiment including the heat press HP and the cooling unit CU is described as the first embodiment, but the embodiment including the cooling unit CU and the embodiment not including the cooling unit CU may be separate embodiments. Further, as shown in (f) of FIG. 5, after forming the folding portion 922 of the pouch 900, without the process of applying heat and/or pressure to the folding portion 922 of the pouch 900 and the sealing portion 920 of the pouch 900, the heat press HP may cool the hinge portion 923 of the pouch 900 as shown in (g) of FIG. 5. Only by performing the process through the cooling unit CU, it may be possible to prevent spring back of the folding portion 922 of the pouch 900.

Hereinafter, different embodiment(s) from the first embodiment will be described. The common description to the first embodiment and the other embodiment(s) is omitted and the other embodiment(s) will be described based on difference(s). That is, it is obvious that when a certain description not mentioned in the second embodiment, the third embodiment and the fourth embodiment is necessary, the description of the first embodiment may make up for the description.

### Second embodiment

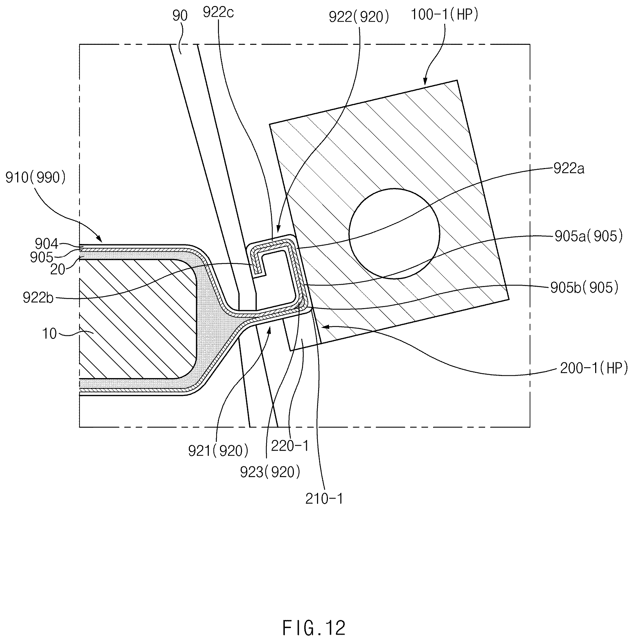

FIG. 12 is an enlarged cross-sectional view showing the heat press HP and the secondary battery 1 according to the second embodiment.

The present disclosure according to the second embodiment will be described with reference to FIG. 12.

The heat press HP according to the second embodiment is different from the first embodiment in that the sub heat press 200-1 does not contact the folding portion 922 of the pouch 900. The outer surface of the folding portion 922 of the pouch 900 may contact the pressing surface 100P of the main heat press 100-1. The pressing surface 100P of the main heat press 100-1 may contact the entire outer surface of the folding portion 922. As in the first embodiment, when the pressing surface 100P of the main heat press 100 and the folding heating surface 230P of the sub heat press 200 contact the outer surface of the folding portion 922 together, for the outer surface of the folding portion 922 to form a plane, the pressing surface 100P of the main heat press 100 and the folding heating surface 230P of the sub heat press 200 need to be aligned in the same plane. To align two surfaces of different elements in the same plane, it is necessary to reduce the tolerance in the process, resulting in high production costs in the production. However, as in the second embodiment, when only the pressing surface 100P of the main heat press 100-1 applies pressure to the outer surface of the folding portion 922, there is no need to align two surfaces of different components in a plane, thereby simplifying the process.

The sub heat press 200-1 according to the second embodiment may include the hinge heating portion 210-1 configured to contact the hinge portion 923 of the pouch 900. The hinge heating portion 210-1 may be protruded from the main heat press 100-1. The hinge heating portion 210-1 may be formed corresponding to the hinge portion 923 of the pouch 900.

The sub heat press 200-1 according to the second embodiment may include the unfolding heating portion 220-1 extended from the hinge portion 923 of the pouch 900. The unfolding heating portion 220-1 may be extended in a direction that is different from the direction in which the main heat press 100-1 is extended. The unfolding heating portion 220-1 may be extended perpendicularly to the direction in which the main heat press 100-1 is extended.

The cooling unit CU according to the second embodiment may correspond to the heat press HP according to the second embodiment. That is, the main cooling unit 300 and the sub cooling unit 400 according to the second embodiment may correspond to the main heat press 100-1 and the sub heat press 200-1 according to the second embodiment.

### Third embodiment

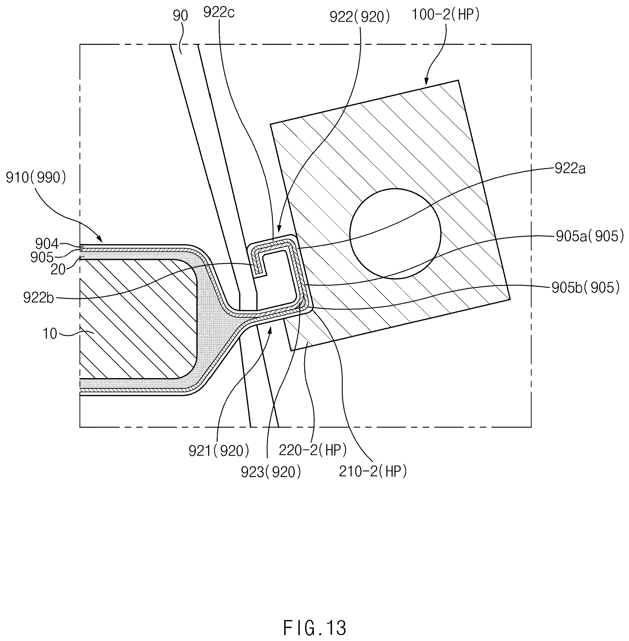

FIG. 13 is an enlarged cross-sectional view showing the heat press HP and the secondary battery 1 according to the third embodiment.

The present disclosure according to the third embodiment will be described with reference to FIG. 13.

The main heat press 100-2 and the sub heat press 200-2 according to the third embodiment is different from the main heat press 100 and the sub heat press 200 of the first embodiment in that the main heat press 100-2 and the sub heat press 200-2 are integrally formed. That is, the sub heat press 200-2 according to the third embodiment may be extended from the main heat press 100-2. When the main heat press 100-2 and the sub heat press 200-2 are integrally formed, in the manufacture of the heat press HP, there may be no need to separately form the main heat press 100-2 and the sub heat press 200-2. The heat press HP having a block shape may be formed, and a groove for accommodating the hinge portion 923 of the pouch 900 may be formed in the heat press HP to form the hinge heating space 200S. In this case, the process of manufacturing the heat press HP may be simplified, and the time required to manufacture the heat press HP may be reduced.

The cooling unit CU according to the third embodiment may correspond to the heat press HP according to the third embodiment. That is, the main cooling unit 300 and the sub cooling unit 400 according to the third embodiment may correspond to the main heat press 100-2 and the sub heat press 200-2 according to the third embodiment.

### Fourth embodiment

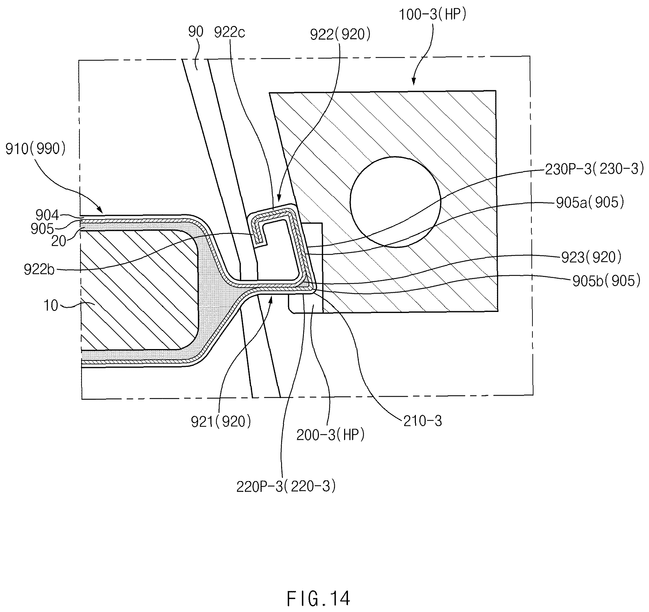

FIG. 14 is an enlarged cross-sectional view showing the heat press HP and the secondary battery 1 according to the fourth embodiment.

The present disclosure according to the fourth embodiment will be described with reference to FIG. 14.

The heat press HP according to the fourth embodiment is different from the heat press HP of the first embodiment in that the angle between the pressing surface 100P and the unfolding heating surface 220P-3 is not a right angle. As the pressing surface 100P and the folding heating surface 230P may be located in the same plane, the folding heating surface 230P may not be perpendicular to the unfolding heating surface 220P-3. That is, the angle of the side where the hinge portion 923 of the pouch 900 is located between the pressing surface 100P and the unfolding heating surface 220P-3 may be an acute angle.

In case spring back of the folding portion 922 is not completely prevented, the folding portion 922 may move away from the accommodation portion 910 of the pouch 900 as time goes by. The folding portion 922 may be extended at an acute angle with respect to the extension direction of the unfolding portion 921 of the pouch 900 so that the folding portion 922 is extended perpendicular to the extension direction of the unfolding portion 921 of the pouch 900. As time goes by, when spring back of the folding portion 922 occurs, the folding portion 922 may be perpendicular to the extension direction of the unfolding portion 921 of the pouch 900. In other words, initially, the folding portion 922 may be located near the accommodation portion 910 of the pouch 900, and as time goes by, the folding portion 922 may be away from the accommodation portion 910 of the pouch 900 and be spaced a predetermined distance apart from the accommodation portion 910 of the pouch 900.

The cooling unit CU according to the fourth embodiment may correspond to the heat press HP according to the fourth embodiment. That is, the main cooling unit 300 and the sub cooling unit 400 according to the fourth embodiment may correspond to the main heat press 100-3 and the sub heat press 200-3 according to the fourth embodiment.

The pouch forming apparatus PA and/or the secondary battery 1 according to an embodiment of the present disclosure may have the following features.

The pouch forming apparatus PA according to an embodiment of the present disclosure may be configured to form the pouch 900 including the accommodation portion 910 of the pouch 900 configured to accommodate the electrode assembly 10 and the sealing portion 920 of the pouch 900 extended from the accommodation portion 910 of the pouch 900, and may include the heat press HP configured to apply pressure to the sealing portion 920 of the pouch 900 to bend at least part of the sealing portion 920 of the pouch 900 to form the unfolding portion 921 of the pouch 900 extended from the accommodation portion 910 of the pouch 900 and the folding portion 922 extended in a direction that is different from the direction in which the unfolding portion 921 of the pouch 900 is extended. The heat press HP may include the main heat press 100 configured to apply pressure to the folding portion 922. The heat press HP may include the sub heat press 200 extended in a direction that is different from the extension direction of the main heat press 100, the sub heat press 200 being configured to apply heat to the hinge portion 923 of the pouch 900 connecting the unfolding portion 921 and the folding portion 922 of the pouch 900 while the main heat press 100 applies pressure to the folding portion 922.

The sub heat press 200 may define the hinge heating space 200S that can accommodate the hinge portion 923 of the pouch 900.

The hinge heating space 200S may be concave in the direction facing away from the hinge portion 923 of the pouch 900 so as to correspond to the hinge portion 923 of the pouch 900.

The sub heat press 200 may include the hinge heating portion 210 configured to contact the hinge portion 923 of the pouch 900 so that the hinge portion 923 of the pouch 900 may directly receive heat from the sub heat press 200.

The sub heat press 200 may further include the unfolding heating portion 220 extended from the hinge heating portion 210 to come into contact with the unfolding portion 921 of the pouch 900 to heat the unfolding portion 921 of the pouch 900.

The unfolding heating portion 220 may be adjacent to the lower end of the main heat press 100 so that it is located below the unfolding portion 921 of the pouch 900 to prevent the unfolding portion 921 of the pouch 900 from moving toward the gravity direction.

The main heat press 100 may have the pressing surface 100P configured to contact the folding portion 922 of the pouch 900 to heat the folding portion 922 of the pouch 900. The sub heat press 200 may have the unfolding heating surface 220P configured to contact the unfolding portion 921 of the pouch 900 to heat the unfolding portion 921 of the pouch 900. The sub heat press 200 may have the hinge heating surface 210P configured to contact the hinge portion 923 of the pouch 900 to heat the hinge portion 923 of the pouch 900.

The unfolding heating surface 220P may be extended at an angle of 90° or less with respect to the extension direction of the pressing surface 100P.

The unfolding heating surface 220P may be extended perpendicularly to the extension direction of the pressing surface 100P.

The sub heat press 200 may include the folding heating portion 230 extended from the hinge heating portion 210 to come into contact with the folding portion 922 of the pouch 900 to heat the folding portion 922 of the pouch 900.

The main heat press 100 may have the pressing surface 100P configured to contact the folding portion 922 of the pouch 900 to heat the folding portion 922 of the pouch 900. The folding heating portion 230 may have the folding heating surface 230P parallel to the pressing surface 100P, the folding heating surface 230P being configured to contact the folding portion 922 of the pouch 900 to heat the folding portion 922 of the pouch 900.

The sub heat press 200 may be configured to heat the hinge portion 923 of the pouch 900 while the main heat press 100 applies pressure to the first folding portion 922a extended from the unfolding portion 921 of the pouch 900 toward the accommodation portion 910 of the pouch 900, the first folding portion 922a being further spaced apart from the accommodation portion 910 of the pouch 900 than the second folding portion 922b located adjacent to the accommodation portion 910 of the pouch 900.

The sub heat press 200 may be coupled to the main heat press 100 separably from the main heat press 100.

The pouch forming apparatus PA may further include the cooling unit CU configured to cool the sealing portion 920 of the pouch 900 to prevent changes of the angle between the unfolding portion 921 of the pouch 900 and the folding portion 922 of the pouch 900 after the folding portion 922 of the pouch 900 is formed. The cooling unit CU may include the main cooling unit 300 configured to support the folding portion 922 of the pouch 900 and including the cooling fin 500 configured to dissipate heat from the sealing portion 920 of the pouch 900. The cooling unit CU may include the sub cooling unit 400 coupled to the main cooling unit 300, and defining the hinge cooling space 400S for accommodating the hinge portion 923 of the pouch 900.

The sub cooling unit 400 may include a silicone material to prevent shock transmission to the hinge portion 923 of the pouch 900.

The pouch forming apparatus PA according to an embodiment of the present disclosure may include the heat press HP configured to apply pressure to the pouch 900, and the heat press HP may include the main heat press 100 and the sub heat press 200 coupled to the main heat press 100 and extended in a direction that is different from the extension direction of the main heat press 100.

The sub heat press 200 may define the hinge heating space 200S that is concave toward the center of the main heat press 100.

The sub heat press 200 may have the folding heating surface 230P located toward the hinge heating space 200S and the unfolding heating surface 220P having an angle of 90° or less with respect to the folding heating surface 230P.

The sub heat press 200 may have the hinge heating surface 210P bent between the folding heating surface 230P and the unfolding heating surface 220P.

The main heat press 200 may have the pressing surface 100P configured to be located in the same plane as the plane formed by extending the folding heating surface 230P.

Unless mentioned otherwise, the disclosed embodiments may be combined with other embodiments. Alternatively, in combining an embodiment with other embodiment, unless otherwise specified, any combination of embodiments may be made without limitation. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical aspect of the present disclosure and the appended claims and their equivalent scope.

### [Explanation of Reference Numerals]

1: Secondary battery
10: Electrode assembly
900: Pouch
910: Accommodation portion
920: Sealing portion
921: Unfolding portion
922: Folding portion
922a: First folding portion
922b: Second folding portion
923c: Third folding portion
923: Hinge portion
PA: Pouch forming apparatus
HP: Heat press
100: Main heat press
100P: Pressing surface
200: Sub heat press
200S: Hinge heating space
210: Hinge heating portion
210P: Hinge heating surface
220: Unfolding heating portion
220P: Unfolding heating surface
230: Folding heating portion
230P: Folding heating surface
CU: Cooling unit
300: Main cooling unit
300P: Support surface
400: Sub cooling unit
400S: Hinge cooling space
410: Hinge cooling portion
410P: Hinge cooling surface
420: Unfolding cooling portion
420P: Unfolding cooling surface
430: Folding cooling portion
430P: Folding cooling surface
500: Cooling fin

## Claims

1. A pouch forming apparatus configured to form a pouch including an accommodation portion configured to accommodate an electrode assembly and a sealing portion extended from the accommodation portion, the pouch forming apparatus comprising:
a heat press configured to apply pressure to the sealing portion to bend at least part of the sealing portion to form an unfolding portion extended from the accommodation portion and a folding portion extended in a direction that is different from a direction in which the unfolding portion is extended,
wherein the heat press includes:
a main heat press configured to apply pressure to the folding portion; and
a sub heat press configured to heat a hinge portion connecting the unfolding portion and the folding portion while the main heat press applies pressure to the folding portion, the sub heat press extended in a direction that is different from the extension direction of the main heat press.

2. The pouch forming apparatus according to claim 1,
wherein the sub heat press defines a hinge heating space for accommodating the hinge portion of the pouch.

3. The pouch forming apparatus according to claim 2,
wherein the hinge heating space is concave in a direction facing away from the hinge portion of the pouch so as to correspond to the hinge portion of the pouch.

4. The pouch forming apparatus according to claim 1,
wherein the sub heat press includes a hinge heating portion configured to contact the hinge portion so that the hinge portion of the pouch directly receives the heat from the sub heat press.

5. The pouch forming apparatus according to claim 4,
wherein the sub heat press further includes an unfolding heating portion extended from the hinge heating portion to come into contact with the unfolding portion to heat the unfolding portion.

6. The pouch forming apparatus according to claim 5,
wherein the unfolding heating portion is located adjacent to a lower end of the main heat press so that the unfolding heating portion is located below the unfolding portion of the pouch to prevent the unfolding portion of the pouch from moving toward a gravity direction.

7. The pouch forming apparatus according to claim 1,
wherein the main heat press has a pressing surface configured to contact the folding portion of the pouch to heat the folding portion of the pouch, and
wherein the sub heat press has:
an unfolding heating surface configured to contact the unfolding portion of the pouch to heat the unfolding portion of the pouch; and
a hinge heating surface configured to contact the hinge portion of the pouch to heat the hinge portion of the pouch.

8. The pouch forming apparatus according to claim 7,
wherein the unfolding heating surface is extended at an angle of 90° or less with respect to the extension direction of the pressing surface.

9. The pouch forming apparatus according to claim 7,
wherein the unfolding heating surface is extended perpendicularly to the extension direction of the pressing surface.

10. The pouch forming apparatus according to claim 4,
wherein the sub heat press includes a folding heating portion extended from the hinge heating portion to come into contact with the folding portion of the pouch to heat the folding portion of the pouch.

11. The pouch forming apparatus according to claim 10,
wherein the main heat press has a pressing surface configured to contact the folding portion of the pouch to heat the folding portion of the pouch, and
wherein the folding heating portion has a folding heating surface configured to contact the folding portion of the pouch to heat the folding portion of the pouch, the folding heating surface being parallel to the pressing surface.

12. The pouch forming apparatus according to claim 1,
wherein the sub heat press is configured to heat the hinge portion of the pouch while the main heat press applies pressure to a first folding portion extended from the unfolding portion of the pouch toward the accommodation portion, the first folding portion being further spaced apart from the accommodation portion than a second folding portion located adjacent to the accommodation portion.

13. The pouch forming apparatus according to claim 1,
wherein the sub heat press is coupled to the main heat press separably from the main heat press.

14. The pouch forming apparatus according to claim 1, further comprising:
a cooling unit configured to cool the sealing portion of the pouch to prevent a change in angle between the unfolding portion of the pouch and the folding portion of the pouch after the folding portion of the pouch is formed, and
wherein the cooling unit includes:
a main cooling unit configured to support the folding portion of the pouch, the main cooling unit including a cooling fin configured to dissipate heat from the sealing portion; and
a sub cooling unit coupled to the main cooling unit, and defining a hinge cooling space for accommodating the hinge portion of the pouch.

15. The pouch forming apparatus according to claim 14, wherein the sub cooling unit includes a silicone material to prevent shock transmission to the hinge portion.

16. A pouch forming apparatus comprising:
a heat press configured to apply pressure to a pouch,
wherein the heat press includes:
a main heat press; and
a sub heat press coupled to the main heat press, and extended in a direction that is different from an extension direction of the main heat press.

17. The pouch forming apparatus according to claim 16,
wherein the sub heat press defines a hinge heating space that is concave toward a center of the main heat press.

18. The pouch forming apparatus according to claim 17,
wherein the sub heat press has:
a folding heating surface located toward the hinge heating space; and
an unfolding heating surface having an angle of 90° or less with respect to the folding heating surface.

19. The pouch forming apparatus according to claim 18,
wherein the sub heat press has a hinge heating surface bent between the folding heating surface and the unfolding heating surface.

20. The pouch forming apparatus according to claim 18,
wherein the main heat press has a pressing surface configured to be located in a same plane as a plane formed by extending the folding heating surface.
